# EUROPEAN PATENT APPLICATION

(11) **EP 0 631 742 A1**
(43) Date of publication of application: **04.01.1995**
(21) Application number: 94109642.2
(22) Date of filing: 22.06.1994
(51) Int. Cl.: A46B 11/06

(54) **An interdental device for simultaneous brushing and irrigation**

(30) Priority: 30.06.1993 IL 10617993
(71) Applicant: Porat, Gadi, Jerusalem 93547 (IL)
(72) Inventor: Porat, Gadi, Jerusalem 93547 (IL)
(74) Representative: Benedum, Ulrich Max, Dr.

(57) **Abstract**

An interdental device for simultaneous brushing and irrigation of spaces between teeth and under bridges consisting of an interdental brush (2) at distal part of a tubular rigid or semi-rigid introducer arm (7), the proximal end of said arm comprising a connecting part to outlet of a syringe or other type of liquid pumping device, said liquid being discharged from arm (7) at or near said distally placed interdental brush.

## Description

### Field of the Invention

The present invention relates to an interdental device for simultaneous brushing and irrigation of interproximal tooth surfaces and surfaces of bridges unaccessible to conventional tooth brushes. More specifically the present invention relates to an interdental brush fixed to a tubular rigid or semi-rigid introducer arm that enables liquid flow for the combined brushing and irrigation in spaces between teeth and under bridges.

### Background of the Invention

The cause of the main dental diseases, i.e. caries and periodontal disease, is the dental plaque. The plaque consists of a mixture of bacteria, some of which are pathogenic, and an extracellular carbohydrate moiety responsible for the adherence of the plaque to the tooth surfaces. Effective plaque control is the only known approach for the prevention of caries and periodontal disease. The most effective plaque control measures are tooth brushing and/or irrigation with antimicrobial solutions or agents that initiate disintegration of the plaque (U.S. pat No. 4,666,708 & 4,657,758).

Plaque removal from most tooth surfaces is attainable using tooth brushes and conventional irrigation devices (U.S. pat. No. 4302186 & 4337040). These measures, however, do not effectively penetrate the interdental space to access interproximal tooth surfaces. In many individuals with healthy gums most of the plaque from the interproximal tooth surfaces can be removed by using dental floss, tooth picks, or by irrigation with a special flexible probe (U.S. pat No. 5,127,831). When the interdental space is increased, usually as a result of periodontal inflammation and gingival regression, interproximal plaque control can be achieved more effectively by using a specially designed interdental brush (U.S. pat. No. 4,805,252). The interdental brush is also an effective measure for otherwise inaccessible bridge surfaces. It is rather surprising that a device for the combined brushing and irrigation is not yet known for enhanced effectiveness of interproximal and under-bridge plaque control.

### Brief Description of the Invention

The present invention relates to an interdental device for simultaneous brushing and irrigation of spaces between teeth and under bridges consisting of an interdental brush connected to the distal part of a tubular rigid or semi-rigid bent or straight introducer arm, the proximal end of said arm comprising a connecting hub to outlet of a syringe or any other liquid pumping device, said liquid being discharged from arm at or near said distally placed interdental brush.

### Detailed Description of the Invention

The present invention relates to an interdental device for simultaneous brushing and irrigation of spaces between teeth and under bridges consisting of an interdental brush at distal part of a tubular rigid or semi-rigid bent or straight introducer arm, the proximal end of said arm comprising a connecting part to outlet of a liquid pumping device, said liquid being discharged from arm at or near said distally placed interdental brush. The irrigation solution can be water or any acceptable physiologic or medical solution. The proximal connection hub is a Luer lock or Luer connection or a threaded attachment or other form of connection element and the brush can be in its preferred embodiment one of the following:
a) A twisted wire brush with an elongated stem.
b) A brush with an elongated stem and bristles adhered to a spine of monofilament or plastic coated wire, or any other type of brush or wire.
c) The brush stem can be a hollow continuation of the tubular arm. Said stem having side outlets for liquid discharge.

The brush stem may be inserted into the tubular arm channel and fixed to the rigid or semi-rigid arm by chemical bonding, or glue, or welding, or insert molding, or plasma etching or crimping or a mechanical locking, without sealing the openings of said channel.

As an alternative the brush stem may be fixed to the tubular arm in a separated sealed internal sleeve and the liquid is discharged through a channel or channels positioned parallel and lateral to the stem.

The present invention will be further illustrated by the following drawings. These are in no way intended to limit the scope of the present invention and are only for clarification.

### Brief Description of the Drawings

Figure 1(a) illustrates a longitudinal section of a known twisted wire brush.
Figure 1(b) is an overview of an interdental device for brushing and irrigation consisting of a rigid or semi-rigid tubular arm with an interdental brush at its distal end.
Figure 1(c) illustrates a longitudinal section of the twisted wire brush and the arm wherein the brush stem is inserted into the tubular arm channel and fixed by mechanical pressure or any other fixation method without sealing of said channel distal-end liquid outlet.
Figure 1(d) illustrates a cross-section of the stem in the tubular arm.
Figure 2(a) illustrates a longitudinal section of the twisted wire brush and the distal part of the arm wherein the brush stem is fixed to the tubular arm in a separated sealed internal sleeve.
Figure 2(b) illustrates a cross-section of the connection area between the brush and the tubular arm described in figure 2(a).
Figure 3 illustrates a longitudinal section (enlargement) of a hollow brush stem having side outlets for liquid discharge, which is a continuation of the tubular arm and its channel.

### Detailed description of the Drawings

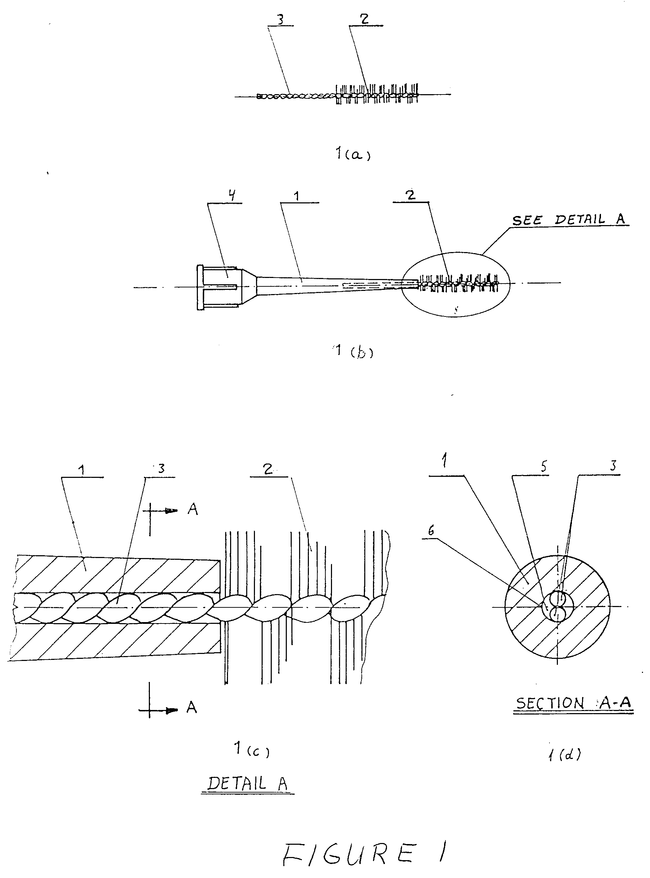

Figure 1(a) illustrates a longitudinal section of a known twisted wire brush (1). Said brush has an elongated stem (3).

Figure 1(b) is an overview of an interdental device for simultaneous brushing and irrigation according to the present invention consisting of a rigid or semi-rigid tubular arm (1) with an interdental brush at its distal end (2), the proximal end of said tubular arm comprises connecting part (3) to outlet of any syringe or any other liquid pumping device.

Figure 1(c) illustrates a longitudinal section of said twisted wire brush (2) and the distal part of the tubular arm (1) wherein the brush stem (3) is inserted into distal part of the tubular arm channel and fixed to the rigid or semi-rigid arm by chemical bonding, or glue, or welding, or insert molding, or plasma etching or crimping of mechanical locking, without sealing the distal openings of said channel. This affixing to the rigid or semi-rigid arm by chemical bonding, or glue, or welding, or insert molding, or plasma etching or a mechanical locking, without sealing the distal opening of said channel, leaves a space for the passage of liquid to the brush, said space is created between the tubular arm inner walls and the twisted wire brush stem.

Figure 1(d) illustrates a cross-section of the stem in the tubular arm channel. The space for the passage of liquid (4) to the brush is created between the tubular arm walls (5) and the stem of the twisted wire brush (6).

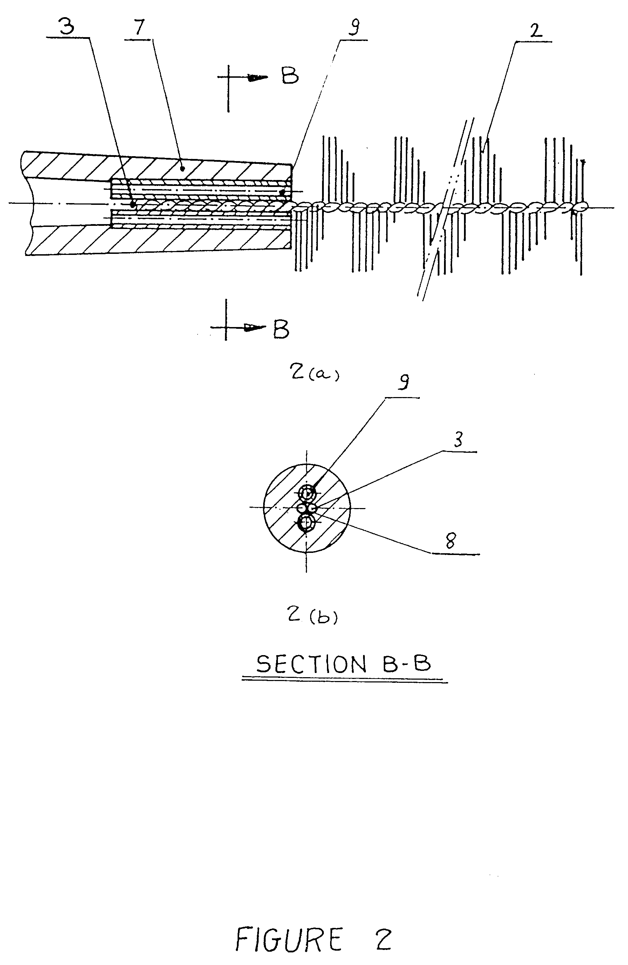

Figure 2(a) illustrates a longitudinal section of the twisted wire brush (6) and an arm (7) according to the invention wherein the brush stem (3) is fixed to the tubular arm in a separated internal sleeve by chemical bonding, or glue, or welding, or insert molding, or plasma etching, or crimping, or mechanical locking. The liquid is sprayed and discharged on the brush through channel or channels (9) (or channels) parallel to the stem, said channels comprising extension or extensions of the channel of the tubular arm.

Figure 2(b) illustrates a cross-section of the connection area between the brush and the tubular arm described in Figure 2(a). The twisted wire brush stem (3) is fixed to a separated internal sleeve (8). The liquid is discharged or sprayed on the brush through a channel or channels (9) parallel to the stem.

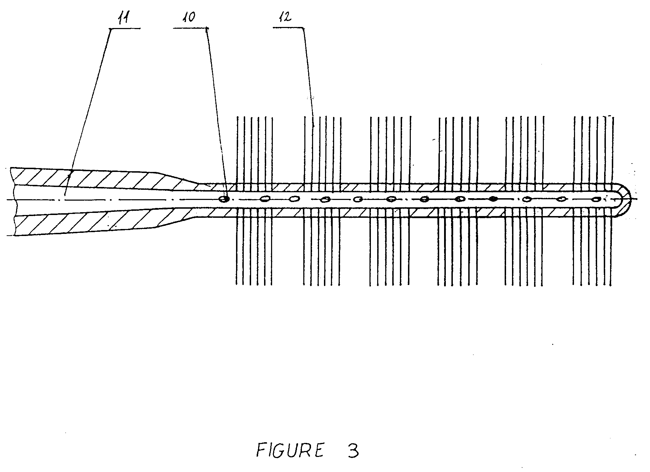

Another preferred embodiment of the presentation is illustrated by figures 3.

Figure 3 illustrates a longitudinal section (enlargement) of a hollow brush stem (11) which is a continuation of the tubular arm and its channel, said hollow stem having side outlets (10) for liquid discharge on the brush bristles (1).

## Claims

1. An interdental device for simultaneous brushing and irrigation of spaces between teeth and under bridges consisting of an interdental brush at distal part of a tubular rigid or semi-rigid introducer arm, the proximal end of said arm comprising a connecting part to outlet of a syringe or other type of liquid pumping device, said liquid being discharged from arm at or near said distally placed interdental brush.

2. An interdental device for simultaneous brushing and irrigation of spaces between teeth and under bridges according to claim 1 wherein the proximal connecting hub is a Luer lock or Luer connection or a threaded attachment or other form of connection element.

3. An interdental device for simultaneous brushing and irrigation of spaces between teeth and under bridges according to claim 1 wherein the brush is a twisted wire brush with elongated stem.

4. An interdental device for simultaneous brushing and irrigation of spaces between teeth and under bridges according to claim 1 wherein the brush has an elongated stem and bristles adhered to spine of monofilament or plastic coated wire.

5. An interdental device for simultaneous brushing and irrigation of spaces between teeth and under bridges according to claim 1 wherein the brush stem is a hollow continuation of the tubular arm, said stem having side outlets for liquid discharge.

6. An interdental device for simultaneous brushing and irrigation of spaces between teeth and under bridges according to claims 1, 3 and 4 wherein the brush stem is inserted into the tubular arm channel and fixed to the rigid or semi-rigid arm by chemical bonding, or glue, or welding, or insert molding, or plasma etching or crimping, or mechanical locking, without sealing the openings of said channel distal-end liquid outlet.

7. An interdental device for simultaneous brushing and irrigation of spaces between teeth and under bridges according to claims 1, 3 and 4 wherein the brush stem is fixed to the tubular arm in a separated internal sleeve and the liquid is discharged through channel or channels positioned parallel to the stem and comprising a continuation of the tubular arm channel.

8. An interdental device for simultaneous brushing and irrigation of spaces between teeth and under bridges according to claim 7 wherein the brush stem is fixed to the tubular rigid or semi-rigid arm by chemical bonding, or glue, or welding, or insert molding, or plasma etching or crimping or mechanical locking, without sealing the openings of said channel.

9. An interdental device for simultaneous brushing and irrigation of spaces between teeth and under bridges according to claim 1 wherein the irrigation solution is water or any acceptable physiologic or medical solution.
